(19) Europäisches Patentamt / European Patent Office / Office européen des brevets

(11) **EP 2 955 657 A1**

(12) **EUROPEAN PATENT APPLICATION**

(43) Date of publication:
**16.12.2015 Bulletin 2015/51**

(51) Int Cl.:
**G06F 21/46** *(2013.01)*

(21) Application number: **15171071.2**

(22) Date of filing: **08.06.2015**

<table>
<tr><td>(84) Designated Contracting States:<br><b>AL AT BE BG CH CY CZ DE DK EE ES FI FR GB<br>GR HR HU IE IS IT LI LT LU LV MC MK MT NL NO<br>PL PT RO RS SE SI SK SM TR</b><br>Designated Extension States:<br><b>BA ME</b><br>Designated Validation States:<br><b>MA</b></td><td>(71) Applicant: <b>Thomson Licensing<br>92130 Issy-les-Moulineaux (FR)</b></td></tr>
<tr><td></td><td>(72) Inventor: <b>Joye, Marc<br>35576 Cesson Sévigné (FR)</b></td></tr>
<tr><td>(30) Priority: <b>12.06.2014 EP 14305884</b></td><td>(74) Representative: <b>Ståhl, Björn Niclas et al<br>Technicolor<br>1, rue Jeanne d'Arc<br>92443 Issy-les-Moulineaux (FR)</b></td></tr>
</table>

(54) **APPARATUSES AND METHODS FOR PASSWORD AUTHENTICATION**

(57) A user inputs (S11) a password entry at a computer (110), which processes (S12) the entry using a function to obtain a plurality of sub-entries that are sent to a server (120). Each sub-entry is generated by padding the password entry to obtain a fix-length password entry from which are generated a number of strings in which different combinations of k characters are missing and then passed through a one-way function. The server (120) receives the sub-entries and compares each sub-entry with stored password verifiers for the user to determine (S13) if they match. If at least one sub-entry matches a password verifier, the user is authenticated and a notification is sent (S14) to the user via the computer (110). If no sub-entry matches a password verifier, then the user is not authorized (S15). Up to k typing errors can be accepted in the password entry.

Figure 2

**Description**

TECHNICAL FIELD

The present disclosure relates generally to computer systems and in particular to the treatment of passwords in such systems.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Passwords are ubiquitous in today's computer systems, for example to authenticate a user for log-on. In its generic definition, a password is constituted of a succession of symbols ("characters") taken within a predefined alphabet (for example: 4 numerical values for PIN code). A password is generally stronger the longer it is, in particular if the password is a mixture of uppercase and lowercase letters, numbers, and special characters such as &, " and #. However, a more complicated password is generally more complicated to type properly, especially since the typed characters do not appear on the screen. In addition, since users may be obliged to input the passwords many times a day, the passwords are often typed very quickly. It is thus not surprising that an input password can contain typing errors. Moreover touchscreen-based devices like smartphones and tablets use virtual keyboards to enter some text, including passwords. With this type of input, typing errors can be quite frequent.

The prior art comprises a number of solutions that provide passwords that are resistant to typing errors.

The tool Password Variator builds a file with all possible variations on the password, emulating up to three typos such as missed characters, duplicated characters, extra characters, wrong order and wrong case. Andrew Mehler and Steven Skiena provide a different solution in Improving Usability Through Password-Corrective Hashing. Their solution processes the password before hashing - for example by sorting the input password alphabetically to correct transpositions - so that it is likely that a slightly misspelt password hashes to the same hash value as the correct password. It is evident that such multiplication of "acceptable" passwords drastically reduces the strength of the password since many different passwords hash to the same value, including passwords that differ from much more than one or two typos.

The solutions in US 7373516 and JP 2005-208763 compare an input password with a stored password in the "password space," i.e. in the clear, to determine if the former is "similar" to the latter. However, since these solutions require a comparison of the plaintext versions of the password, they cannot be used in real systems where storing the password in clear is generally unacceptable for obvious security reasons. Generally, authentication is handled by a server that stores a hashed version of the password, to be compared with a hashed version of the password entry typed by the user. This is to make stealing of the passwords file less valuable.

JP 2007-114976 teaches a device, such as a PC, that among other things provides the function of keeping a count of the number of times a mistyped password is input and storing a mistyped password as an acceptable password when the number of times is sufficiently large, e.g. ten times. The skilled person will appreciate that the solution is insecure since there does not appear to be any control of the addition of the mistyped passwords; when a wrong password has been input ten times, it is stored as an acceptable password, which means that a hacker only needs to input a password ten times to have it accepted.

It can therefore be appreciated that there is a need for a solution that can allow an authentication system to allow mistyped passwords without having the drawbacks of the prior art solutions. The present disclosure provides such a solution.

SUMMARY OF DISCLOSURE

In a first aspect, the principles are directed to an apparatus for processing a password entry comprising an interface configured to receive a password entry comprising a string of characters and a processor configured to generate a plurality of sub-entries from the password entry, wherein each sub-entry is equal to the string of characters less a different combination of $k$ characters, where k is an integer, and generate password verifiers by respectively using a function on each sub-entry.

In a first embodiment, the function is a one-way hash function or an encryption function.

In a second embodiment, the processor is further configured to pad the password entry to obtain a padded password entry of length L, where L is an integer, and to generate the plurality of sub-entries from the padded password entry.

In a third embodiment, the apparatus is a user device and the interface is a user interface and the user device further comprises a communication interface configured to output the password verifiers to an authentication apparatus.

In a second aspect, the principles are directed to a method for processing a password entry comprising receiving by an interface a password entry comprising a string of characters, generating by a processor a plurality of sub-entries from the password entry, wherein each sub-entry is equal to the string of characters less a different combination of k characters, where k is an integer, and generating by the processor password verifiers by respectively using a function on each sub-entry.

In a third aspect, the principles are directed to an apparatus for authentication of a password entry input by a user, the apparatus comprising a memory configured to store M password verifiers for a user, where M is an integer, and a processor configured to obtain N obtained password verifiers representative of the password entry, where N is an integer, compare each of the obtained password verifiers with the stored password verifiers, and authenticate the password entry upon determination that at least one obtained password verifiers matches a stored password verifier.

In a first embodiment, the apparatus further comprises an interface configured to receive the obtained password verifiers from a user device and to send the obtained password verifiers to the processor.

In a second embodiment, the apparatus further comprises an interface configured to receive the password entry from a user device and to send the password entry to the processor, and the processor is further configured to use a function to generate the stored password verifiers.

In a third embodiment, the stored password verifiers and the obtained password verifiers are ordered and the processor is configured to compare each obtained password verifier only with the stored password verifier with the same order.

In a fourth aspect, the principles are directed to a method for authentication of a password entry input by a user comprising obtaining by a processor N obtained password verifiers representative of the password entry, comparing by the processor the obtained password verifiers with M stored password verifiers, and authenticating by the processor the password entry upon determination that at least one obtained password verifier matches a stored password verifier.

In a fifth aspect, the principles are directed to a computer program comprising program code instructions executable by a processor for implementing the steps of a method according to the second aspect.

In a sixth aspect, the principles are directed to a computer program product which is stored on a non-transitory computer readable medium and comprises program code instructions executable by a processor for implementing the steps of a method according to claim the second aspect.

In a seventh aspect, the principles are directed to a computer program comprising program code instructions executable by a processor for implementing the steps of a method according to the fourth aspect.

In a eighth aspect, the principles are directed to a computer program product which is stored on a non-transitory computer readable medium and comprises program code instructions executable by a processor for implementing the steps of a method according to claim the fourth aspect.

## BRIEF DESCRIPTION OF DRAWINGS

Preferred features of the present disclosure will now be described, by way of non-limiting example, with reference to the accompanying drawings, in which

Figure 1 illustrates an exemplary system in which the disclosure may be implemented; and
Figure 2 illustrates an exemplary method of password authentication of the present disclosure.

## DESCRIPTION OF EMBODIMENTS

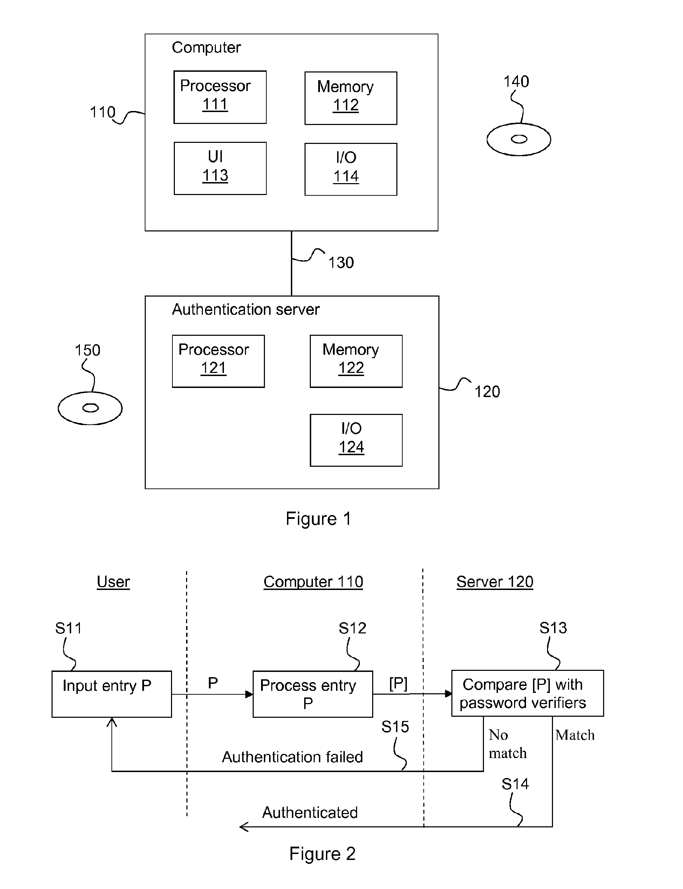

Figure 1 illustrates an exemplary system in which the disclosure may be implemented. The system comprises a computing device ("computer") 110 and an authentication server 120. The computer 110 and the authentication server (hereinafter "server") 120 can be any kind of suitable computer or device capable of performing calculations, such as a standard Personal Computer (PC) or workstation. The computer 110 and the server 120 each preferably comprises at least one processor 111, 121, internal of external RAM memory 112, 122 for storing password verifiers, a user interface 113 for interacting with a user, and a second interface 114, 124 for interaction with other devices over connection 130. The computer 110 and the server 120 each also preferably comprises an interface for reading a software program from a non-transitory digital data support 140, 150 that stores instructions that, when executed by a processor, perform any of the password methods described hereinafter. The skilled person will appreciate that the illustrated devices are very simplified for reasons of clarity and that real devices in addition would comprise features such as persistent storage. The skilled person will appreciate that the present disclosure may also be implemented on just the computer 110 if the password just provides access to the computer itself; in this case, the server 120 is implemented in the computer.

Figure 2 illustrates a first exemplary method of password authentication of the present disclosure. It is assumed that the user already has a user name and a reference password. It is to be noted that the user name is superfluous in situations when it is implicit, such as when there is only one user, which may be the case on a smartphone or a tablet. It is also assumed that the server 120 stores the user name, if needed, and a plurality of password verifiers generated from the reference password by a "resistance" function. It is preferably computationally difficult to inverse the resistance function; in other words, given a value x and a resistance function $f()$, calculating $f(x)$ is easy, but given a value $y=f(x)$, it is computationally difficult to find the value x or a different value producing the same result. While it is possible for the server 120 to generate the plurality of password verifiers from the reference password, it is preferable that the user device 110 (or another device on which the user inputs creates a new password) generates the password verifiers and sends these, preferably authenticated, to the server 120 for storage.

The plurality of password verifiers are intended to make the system resistant to errors made by a user when inputting a password once the reference password has been created. They can be generated in different ways as will now be described:

- Padding: the resistance function can pad the reference password to a certain length before further processing.
- Maximum number of typing errors that can be accepted: the resistance function can generate password verifiers intended to accept up to 1, 2, 3,... typing errors in an input password.
- Subfunction: different subfunctions such as hash functions (SHA-1, SHA-3, MD5,...) or encryption functions (RSA, elliptic curve cryptography) - padded or unpadded - may be used.

The following illustrative example uses a reference password equal to TECHNICOLOR, padding to 12 characters, a maximum acceptation of 1 typing error and a hash function, denoted h().

The resistance function first pads the reference password to 12 characters by adding some characters, for example asterisks: TECHNICOLOR*

In order to accept up to 1 typing error, the resistance function then generates 12 (a value equal to the padded length) of sub-passwords where each sub-password omits one of the characters in the padded reference password:

ECHNICOLOR*
TCHNICOLOR*
TEHNICOLOR*
TECNICOLOR*
TECHICOLOR*
TECHNCOLOR*
TECHNIOLOR*
TECHNICLOR*
TECHNICOOR*
TECHNICOLR*
TECHNICOLO*
TECHNICOLOR

The resistance function finally uses the subfunction on each sub-password, preferably combined with a salt, to generate 12 password verifiers: h(ECHNICOLOR*), h(TCHNICOLOR*), ... Different subfunctions may be used for different sub-passwords. It will be appreciated that the resistance function can generate a further password verifier by using the subfunction on the reference password, in its unmodified form, in its padded form or both.

Put another way, the resistance method takes a, padded or unpadded, reference password RP with L characters $p[1]||p[2]||...||p[L]$ and generates L sub-passwords by omitting character $i$ in sub-password i, and applying a subfunction H to each preferably salted sub-password, which results in $L$ password verifiers:

$$RP_1 = H_1(p[2]||p[3]||\ldots||p[L]||\text{salt})$$

$$RP_2 = H_2(p[1]||p[3]||\ldots||p[L]||\text{salt})$$

$$\ldots$$

$$RP_L = H_L(p[1]||p[2]||\ldots||p[L-1]||\text{salt})$$

In a first step, the user inputs S11 a password entry P (hereafter named entry) using the user interface 113 of the computer 110, which then processes S12 the entry using the resistance function to obtain a plurality of sub-entries [P]. The plurality of sub-entries [P] is then sent to the server 120. The skilled person will appreciate that it is preferable to use authentication, such as the Secure Authenticated Channel (SAC) described in WO 2006/048043, to protect the plurality of sub-entries [P] during the transfer to the server 120, but this will not be described as it is well known to the skilled person and beyond the scope of the present disclosure. The skilled person will also appreciate that it is possible to transfer the password entry P in the password space through a SAC to the server 120 that then performs processing step S12.

The server 120 receives the plurality of sub-entries [P] and compares each sub-entry with the stored password verifiers for the user to determine S13 if they match. If at least one sub-entry matches a password verifier, the user is authenticated and a notification is sent S14 to the user via the computer 110. If no sub-entry matches a password verifier, then the user is not authorized S15 (i.e. not authenticated) and is preferably notified of this and it is possible that the user may be offered a new attempt to input the entry.

The illustrated method can readily be generalised to handle up to $k$ typing errors by generating $\binom{L}{k} = \frac{L!}{(L-k)!k!}$ different password verifiers and sub-entries, wherein each password verifier and sub-entry is generated by omitting k characters from the (padded) reference password.

It will be appreciated that with an increasing k, the security of the system decreases and the computation and storage requirements increase. For example, for L = 20, $k$ = 1 corresponds to 20 values, $k$ = 2 corresponds to 190 values and k = 3 corresponds to 1140 values.

For k = 1, the method can be described as the following algorithm, which preferably is implemented in constant time to prevent timing attacks:

**Algorithm 1** Typo-resistant password verification (with at most 1 mistyped character)
**Input:** Candidate password: $\hat{p}[1]\|...\|\hat{p}[L]$; salt value: salt
Output: status (i.e., status = 1 if entered password is accepted)
(*In memory: H*[1],..., *H*[L])

```
1: status ← 0
2: for i = 1 to L do
3: Ĥ ← Hᵢ(p̂[1]‖...‖p̂[L]\p̂[i] ‖ salt)
4: if Ĥ = H[i] then
5: status ← 1
6: end if
7: end for
8: return status
```

It will be seen that Algorithm 1 only checks if sub-entry $i$ matches password verifier $i$ which leads to higher security than comparisons between a sub-entry and all password verifiers for the user.

For k = 2, the method can be described as the following algorithm, which preferably is implemented in constant time to prevent timing attacks:

**Algorithm 2** Typo-resistant, password verification (with at most 2 mistyped characters)
**Input:** Candidate password: $\hat{p}[1]\|...\|\hat{p}[L]$; salt value: salt
Output: status (i.e., status = 1 if entered password is accepted)
(*In memory: H*[1,2],...,*H*[1,L],...,*H*[2,3],...,*H*[2,L],...,*H*[L-1,L])

```
1: status ← 0
2: for i = 1 to L - 1 do
3: for j = i + 1 to L do
4: Ĥ ← Hᵢ,ⱼ(p̂[1]‖...‖p̂[L]\p̂[i],p̂[j] ‖ salt)
5: if Ĥ = H[i,j] then
6: status ← 1
7: end if
8: end for
7: end for
8: return status
```

To mitigate the growth of the table of password verifiers stored in the memory, it is possible to trade storage against computation. For example, instead of using $H[i, j] = H_{i,j}(p[1]|| ... ||p[L]\backslash p[i],p[j] || salt)$ to support two mistyped characters, it is possible to start from L password verifiers for one mistyped character and modify the verification algorithm accordingly. This is illustrated in Algorithm 3 hereinafter. For illustrative purposes, it is assumed that a character is coded on one byte (ranging in value from 0 to 255); the algorithm requires L stored password verifiers and $256L(L - 1)$ hash function evaluations which is to be compared with the $L(L - 1)/2$ stored password verifiers and $L(L - 1)/2$ hash function evaluations in Algorithm 2.

**Algorithm 3** Typo-resistant memory-efficient password verification (with at most 2 mistyped characters)
**Input:** Candidate password: $\hat{p}[1]|| ... ||\hat{p}[L]$; salt value: salt
Output: status (i.e., status = 1 if entered password is accepted)
*(In memory: H[1],...,H [L])*

```
1: status ← 0
2: for i = 1 to L do
3: for j = 1 to L do
4: if j ≠ i
5: bak ← p̂[j]
6: for Char = 0 to 255 do
7: p̂[j] ← Char
8: if Hi(p̂[1]|| ... ||p̂[L]\p̂[i] || salt) = H[i] then
9: status ← 1
10: end if
11: end for
12: p̂[j] ← bak
13: end if
14: end for
15: end for
16 return status
```

As for the previous algorithms, Algorithm 3 is preferably implemented in constant time so as to prevent timing attacks.

In the algorithms, it is preferred that the different functions H are the same throughout the algorithms, advantageously SHA-3.

Examples

Assuming that the reference password is TECHNICOLOR and that the password verifiers, able to accept up to one error, are TECHNICOLOR*, TCHNICOLOR*, TEHNICOLOR*, TECNICOLOR*, TECHICOLOR*, TECHNCOLOR*, TECHNIOLOR*, TECHNICLOR*, TECHNICOOR*, TECHNICOLOR*, TECHNICOLO*, TECHNICOLOR, then the following mistyped password entries (with errors in **bold** except where a character is missing) are accepted or rejected as indicated in the table below:

| Entry | Matching sub-password | Accepted |
|---|---|---|
| TEC**B**NICOLOR | TECNICOLOR* | Yes |
| TECHNICOLO | TECHNICOLO* | Yes |
| TECHNICOLOR**E** | TECHNICOLOR | Yes |
| TECH**HJ**COLOR | - | No |

It will be appreciated that the present disclosure can provide password system that is resistant to typing errors and that the comparison can be made in the protected space.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. An apparatus (110, 120) for processing a password entry comprising:

   - an interface (113, 124) configured to receive a password entry comprising a string of characters; and
   - a processor (111, 121) configured to:

      - generate a plurality of sub-entries from the password entry, wherein each sub-entry is equal to the string of characters less a different combination of k characters, where k is an integer; and
      - generate password verifiers by respectively using a function on each sub-entry.

2. The apparatus of claim 1, wherein the function is a one-way hash function or an encryption function.

3. The apparatus of claim 1, wherein the processor is further configured to pad the password entry to obtain a padded password entry of length L, where L is an integer, and to generate the plurality of sub-entries from the padded password entry.

4. The apparatus of claim 1, wherein the apparatus is a user device (110) and the interface is a user interface (113) and wherein the user device (110) further comprises a communication interface (114) configured to output the password verifiers to an authentication apparatus (120).

5. A method for processing a password entry comprising:

   - receiving (S11) by an interface (113, 124) a password entry comprising a string of characters;
   - generating (S12) by a processor (111, 121) a plurality of sub-entries from the password entry, wherein each sub-entry is equal to the string of characters less a different combination of k characters, where k is an integer; and
   - generating (S12) by the processor (111, 121) password verifiers by respectively using a function on each sub-entry.

6. An apparatus (120) for authentication of a password entry input by a user, the apparatus comprising:

   - a memory (122) configured to store M password verifiers for a user, where M is an integer; and
   - a processor (121) configured to:

      obtain N obtained password verifiers representative of the password entry, where N is an integer;
      compare each of the obtained password verifiers with the stored password verifiers; and
      authenticate the password entry upon determination that at least one obtained password verifiers matches a stored password verifier.

7. The apparatus of claim 6, further comprising an interface (124) configured to receive the obtained password verifiers from a user device (110) and to send the obtained password verifiers to the processor (121).

8. The apparatus of claim 6, further comprising an interface (124) configured to receive the password entry from a user device (110) and to send the password entry to the processor (121), wherein the processor is further configured to use a function to generate the stored password verifiers.

9. The apparatus of claim 6, wherein the stored password verifiers and the obtained password verifiers are ordered and wherein the processor (121) is configured to compare each obtained password verifier only with the stored password verifier with the same order.

10. A method for authentication of a password entry input by a user comprising:

   - obtaining by a processor (121) N obtained password verifiers representative of the password entry;
   - comparing by the processor (121) the obtained password verifiers with M stored password verifiers; and
   - authenticating by the processor (121) the password entry upon determination that at least one obtained password verifier matches a stored password verifier.

11. Computer program comprising program code instructions executable by a processor for implementing the steps of a method according to claim 5.

**12.** Computer program product (140) which is stored on a non-transitory computer readable medium and comprises program code instructions executable by a processor for implementing the steps of a method according to claim 5.

**13.** Computer program comprising program code instructions executable by a processor for implementing the steps of a method according to claim 10.

**14.** Computer program product (150) which is stored on a non-transitory computer readable medium and comprises program code instructions executable by a processor for implementing the steps of a method according to claim 10.

Figure 1

Figure 2

Europäisches
Patentamt

European
Patent Office

Office européen
des brevets

# EUROPEAN SEARCH REPORT

**Application Number**

EP 15 17 1071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/066167 A1 (ANDRI MICHAEL J [US]) 13 March 2008 (2008-03-13) * abstract; figures 2,20 * * paragraph [0036] - paragraph [0039] * * paragraph [0070] * * paragraph [0081] * * claims 1-20 * | 1-14 | INV. G06F21/46 |
| X | US 6 079 021 A (ABADI MARTIN [US] ET AL) 20 June 2000 (2000-06-20) * the whole document * | 1-14 | |
| A | US 5 204 966 A (WITTENBERG DAVID K [US] ET AL) 20 April 1993 (1993-04-20) * the whole document * | 1-14 | |
| A | US 2013/254875 A1 (SAMA VENKATA BABJI [IN]) 26 September 2013 (2013-09-26) * the whole document * | 1-14 | |
| A | GREGORY V BARD: "Spelling-Error Tolerant, Order-Independent Pass-Phrases via the Damerau-Levenshtein String-Edit Distance Metric", INTERNATIONAL ASSOCIATION FOR CRYPTOLOGIC RESEARCH,, vol. 20061103:161300, 20 October 2006 (2006-10-20), pages 1-8, XP061001967, * the whole document * | 1-14 | TECHNICAL FIELDS SEARCHED (IPC) G06F |

The present search report has been drawn up for all claims

| Place of search | Date of completion of the search | Examiner |
|---|---|---|
| The Hague | 22 October 2015 | Powell, David |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 15 17 1071

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2015

| Patent document cited in search report | | Publication date | Patent family member(s) | | Publication date |
|---|---|---|---|---|---|
| US 2008066167 | A1 | 13-03-2008 | NONE | | |
| US 6079021 | A | 20-06-2000 | NONE | | |
| US 5204966 | A | 20-04-1993 | AU | 637191 B2 | 20-05-1993 |
| | | | AU | 7109191 A | 03-10-1991 |
| | | | CA | 2037071 A1 | 10-09-1991 |
| | | | DE | 4107019 A1 | 12-09-1991 |
| | | | GB | 2243470 A | 30-10-1991 |
| | | | NL | 9100329 A | 01-10-1991 |
| | | | US | 5204966 A | 20-04-1993 |
| US 2013254875 | A1 | 26-09-2013 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7373516 B
- JP 2005208763 A
- JP 2007114976 A
- WO 2006048043 A